(19) Europäisches Patentamt / European Patent Office / Office européen des brevets

(11) **EP 4 503 240 A1**

(12) **EUROPEAN PATENT APPLICATION**
published in accordance with Art. 153(4) EPC

(43) Date of publication:
**05.02.2025 Bulletin 2025/06**

(21) Application number: **23779248.6**

(22) Date of filing: **03.03.2023**

(51) International Patent Classification (IPC):
*H01M 10/0587* (2010.01)    *H01M 10/04* (2006.01)
*H01M 10/052* (2010.01)    *H01M 50/46* (2021.01)
*H01M 50/474* (2021.01)

(52) Cooperative Patent Classification (CPC):
**H01M 10/04; H01M 10/052; H01M 10/0587;
H01M 50/46; H01M 50/474;** Y02E 60/10;
Y02P 70/50

(86) International application number:
**PCT/JP2023/008156**

(87) International publication number:
**WO 2023/189219 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022061347**

(71) Applicant: **Zeon Corporation
Tokyo 100-8246 (JP)**

(72) Inventor: **SATO Masanobu
Tokyo 100-8246 (JP)**

(74) Representative: **Maiwald GmbH
Elisenhof
Elisenstraße 3
80335 München (DE)**

(54) **WOUND ELECTRODE BODY AND NON-AQUEOUS SECONDARY BATTERY**

(57) Provided are a wound electrode body that can inhibit current collector damage accompanying charge/-discharge cycles and a secondary battery that includes this wound electrode body. The wound electrode body is obtained through winding of a laminate including a positive electrode, a negative electrode, and a separator and has a spacer arranged at one or more locations at an interface between the positive electrode and the separator and/or an interface between the negative electrode and the separator.

FIG. 1

EP 4 503 240 A1

**Description**

TECHNICAL FIELD

The present disclosure relates to a wound electrode body and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. A known example of such a secondary battery is obtained by housing, in an outer can (battery can), a wound electrode body that is obtained by winding up electrodes (positive electrode and negative electrode), each having an electrode mixed material layer on a current collector, with a separator between the electrodes. Such secondary batteries are widely used as batteries for in-vehicle use, for example.

Secondary batteries such as lithium ion secondary batteries are known to experience electrode expansion and contraction caused by charge/discharge cycles. Consequently, secondary batteries that include a wound electrode body (wound secondary batteries) suffer from problems when subjected to repeated charge/discharge cycles, such as current collector damage due to the application of stress to a current collector caused by expansion of the wound electrode body.

A variety of techniques have been disclosed to solve various problems such as described above that are caused by expansion of a wound electrode body. For example, Patent Literature (PTL) 1 discloses that when obtaining a flat spiral electrode body by winding up electrode plates with a separator in-between, the electrode plates are rotated in the same direction as the winding direction so as to slacken the wound-up state and thereby provide slack in proximity to corners of the flat spiral electrode body. PTL 1 discloses that even in a situation in which the electrode plates expand, this configuration suppresses expansion of a battery as a result of the electrode plates deforming in a direction that takes up the aforementioned slack.

CITATION LIST

Patent Literature

PTL 1: JP2006-164959A

SUMMARY

(Technical Problem)

In recent years, there has been demand for even higher secondary battery capacity, and there has also been progression toward larger secondary battery size. Consequently, there is demand for increasing the wind count of a wound electrode body in order to obtain a wound secondary battery of larger size. Studies conducted by the inventor have revealed that in the case of a large wound secondary battery having a wound electrode body with an increased wind count, expansion of the wound electrode body caused by charge/discharge cycles results in the generation of large stress particularly at an outer side of the wound electrode body, which makes current collector damage more likely to occur at the outer side of the wound electrode body.

Consequently, the inventor attempted to inhibit current collector damage in a large wound secondary battery by providing slack in the wound-up state of a wound electrode body as in the conventional technique described above. However, the inventor found that in the case of a large wound electrode body having a high wind count, it is difficult to provide slack at the outer side of the wound electrode body and that, as a result, it is not possible to inhibit expansion of the wound electrode body and, in particular, it is not possible to prevent current collector damage at the outer side of the wound electrode body.

As set forth above, there is room for improvement of a wound electrode body of the conventional technique in terms of inhibiting current collector damage accompanying charge/discharge cycles.

Accordingly, an object of the present disclosure is to provide a wound electrode body that can inhibit current collector damage accompanying charge/discharge cycles and a non-aqueous secondary battery that includes this wound electrode body.

(Solution to Problem)

The inventor conducted diligent investigation with the aim of solving the problem set forth above. The inventor discovered that by arranging a spacer at an electrode-separator interface in a wound electrode body that is obtained through winding of a laminate including a positive electrode, a negative electrode, and a separator, it is possible to relieve stress that acts on a current collector in accompaniment to charge/discharge cycles and to inhibit damage of the current collector. In this manner, the inventor completed the present disclosure.

Specifically, with the aim of advantageously solving the problem set forth above, [1] a presently disclosed wound electrode body is obtained through winding of a laminate comprising a positive electrode, a negative electrode, and a separator, wherein a spacer is arranged at one or more locations at either or both of an interface between the positive electrode and the separator and an interface between the negative electrode and the separator. Through a spacer being arranged at one or more locations at an electrode-separator interface in this manner, it is possible to inhibit current collector damage.

[2] In the wound electrode body according to the foregoing [1], it is preferable that the wound electrode body is of a flat type and has curved sections respectively located at opposite sides in a flattening direction and a flat section located between the curved sections, and that the spacer is arranged either or both of at the curved sections and at opposite end portions of the flat section. Even in the case of a flat-type wound electrode body, by arranging a spacer at curved sections and/or at opposite end portions of a flat section in this manner, it is possible to further inhibit current collector damage.

Note that the "flattening direction" of the wound electrode body referred to in the present disclosure is a direction that is perpendicular to a winding axis of the wound electrode body and is a direction in which a wound body spreads out when a cylindrical laminate that has been wound up is pressed into a flat type.

[3] In the wound electrode body according to the foregoing [2], it is preferable that the spacer is arranged at the opposite end portions of the flat section and that when straight line distance in the flattening direction between the spacer arranged at the opposite end portions of the flat section is taken to be R and when length in the flattening direction between the spacer along the laminate at an interface where the spacer is arranged is taken to be L, a relationship R < L is satisfied. When the wound electrode body satisfies the specific relationship set forth above in this manner, this means that the laminate is slackened as a result of arrangement of the spacer. Consequently, stress acting on the wound electrode body during battery expansion can be relieved, and current collector damage can be inhibited.

[4] In the wound electrode body according to the foregoing [2] or [3], it is preferable that density of the opposite end portions of the flat section is smaller than density of a central portion of the flat section in the laminate. When the density of the opposite end portions of the flat section is smaller than the density of the central portion of the flat section in this manner, this means that gaps are formed at the opposite end portions of the flat section in the laminate and that the laminate is slackened in proximity to the spacer. Consequently, stress acting on the wound electrode body can be relieved, and current collector damage can be inhibited.

[5] In the wound electrode body according to any one of the foregoing [2] to [4], it is preferable that the spacer is arranged both at the curved sections and at the opposite end portions of the flat section. When the spacer is arranged both at the curved sections and at the opposite end portions of the flat section in this manner, stress acting on the wound electrode body can be further relieved, and current collector damage can be further inhibited.

[6] In the wound electrode body according to any one of the foregoing [1] to [5], it is preferable that the spacer is arranged in plurality at positions overlapping with one another when the wound electrode body is viewed in a stacking direction of the laminate and that deposited amount of the spacer increases gradually from an inner side toward an outer side of the wound electrode body. By adopting a configuration in which the spacer is arranged in plurality at positions overlapping with one another when the wound electrode body is viewed in a stacking direction of the laminate and in which the deposited amount of the spacer increases gradually from an inner side toward an outer side of the wound electrode body in this manner in consideration that stress tends to be larger at the outer side of the wound electrode body, it is possible to further relieve stress acting on the wound electrode body and to further inhibit current collector damage.

[7] In the wound electrode body according to any one of the foregoing [1] to [6], it is preferable that the spacer has a dot shape. When the spacer has a dot shape in this manner, efficient arrangement of the spacer can be performed by an inkjet method.

[8] In the wound electrode body according to any one of the foregoing [1] to [6], it is preferable that the spacer has a dashed line shape. When the spacer has a dashed line shape in this manner, injectability of electrolyte solution can be improved because it is easier for electrolyte solution to pass through a section where the spacer is arranged.

[9] In the wound electrode body according to any one of the foregoing [1] to [8], it is preferable that the laminate further comprises an adhesive layer. When the laminate further comprises an adhesive layer in this manner, adhesive strength between laminate layers in the wound electrode body can be improved, and buckling of the wound electrode body can be inhibited well.

[10] In the wound electrode body according to the foregoing [9], it is preferable that the adhesive layer has a degree of swelling in electrolyte solution of not less than $\times 1$ and not more than $\times 20$. When the adhesive layer has a degree of swelling in electrolyte solution that is within the specific range set forth above in this manner, wet adhesive strength between the laminate in the wound electrode body can be improved.

Note that the degree of swelling in electrolyte solution of the adhesive layer referred to in the present disclosure can be measured by a method described in the EXAMPLES section.

[11] In the wound electrode body according to any one of the foregoing [1] to [10], it is preferable that the spacer is formed of a particulate polymer and that the particulate polymer has a deformation strength of not less than 1 MPa and not more than 2 GPa. When the spacer is formed of a particulate polymer and the particulate polymer has a deformation strength that is within the specific range set forth above in this manner, piercing of the separator by the spacer can be inhibited while also further inhibiting current collector damage.

Note that the deformation strength of the particulate polymer referred to in the present disclosure can be measured by a method described in the EXAMPLES section.

With the aim of advantageously solving the problem set forth above, [12] a presently disclosed secondary battery comprises the wound electrode body according to any one of the foregoing [1] to [11]. As a result of the presently disclosed secondary battery including the presently disclosed wound electrode body in this manner, current collector damage accompanying charge/discharge cycles is inhibited.

(Advantageous Effect)

According to the present disclosure, it is possible to provide a wound electrode body that can inhibit current collector damage accompanying charge/discharge cycles and a non-aqueous secondary battery that includes this wound electrode body.

BRIEF DESCRIPTION OF THE DRAWINGS

In the accompanying drawings:

FIG. 1 is a side view schematically illustrating a wound electrode body according to one embodiment;
FIGS. 2A to 2D are side views schematically illustrating part of the wound electrode body according to the one embodiment in an enlarged form;
FIG. 3 is a side view schematically illustrating a wound electrode body according to another embodiment;
FIG. 4 is a side view schematically illustrating a wound electrode body according to yet another embodiment;
FIG. 5 is a side view schematically illustrating a wound electrode body according to yet another embodiment;
FIG. 6 is a plan view schematically illustrating a laminate used in production of the wound electrode body according to the one embodiment;
FIG. 7A is a side view schematically illustrating a wound electrode body in an initial state; and
FIG. 7B is a diagram for describing stress acting on a current collector upon expansion of the wound electrode body in FIG. 7A.

DETAILED DESCRIPTION

The following provides a detailed description of embodiments of the present disclosure.

(Wound electrode body)

The presently disclosed wound electrode body is a body that is obtained through winding of a laminate including a positive electrode, a negative electrode, and a separator. In other words, the presently disclosed wound electrode body is a body that is obtained through winding of a positive electrode and a negative electrode with a separator in-between. A feature of the presently disclosed wound electrode body is that it has a spacer arranged at one or more locations at an interface between the positive electrode and the separator and/or an interface between the negative electrode and the separator. Specifically, in a case in which the wound electrode body is obtained through winding of a laminate in which a separator A, a positive electrode, a separator B, and a negative electrode are stacked in this order, for example, at least one spacer, and preferably a plurality of spacers are arranged at one or more interfaces among interfaces that extend in a spiral shape with the winding axis at the center when viewed in an extension direction of the winding axis (i.e., an interface between the separator A and the positive electrode, an interface between the positive electrode and the separator B, an interface between the separator B and the negative electrode, and an interface between the negative electrode and the separator A). In addition, the presently disclosed wound electrode body can include current collector tabs for electrically connecting to an external circuit or the like.

As a result of a spacer being arranged at one or more locations at an interface between the positive electrode and the separator and/or an interface between the negative electrode and the separator in the presently disclosed wound electrode body, current collector damage is inhibited even upon expansion of the wound electrode body.

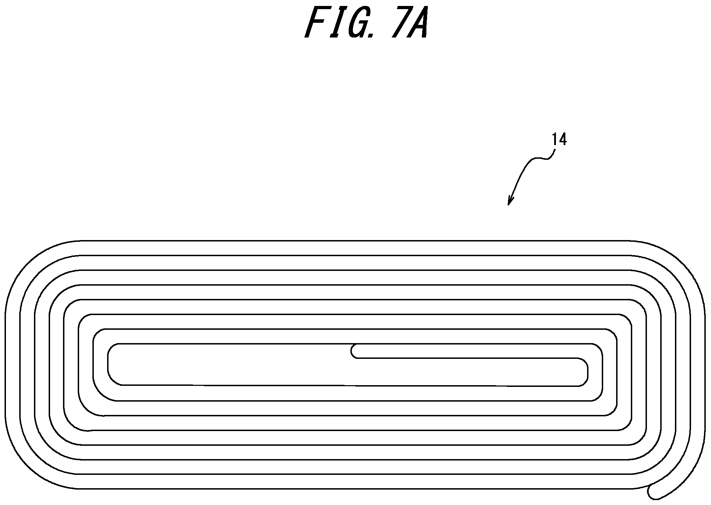

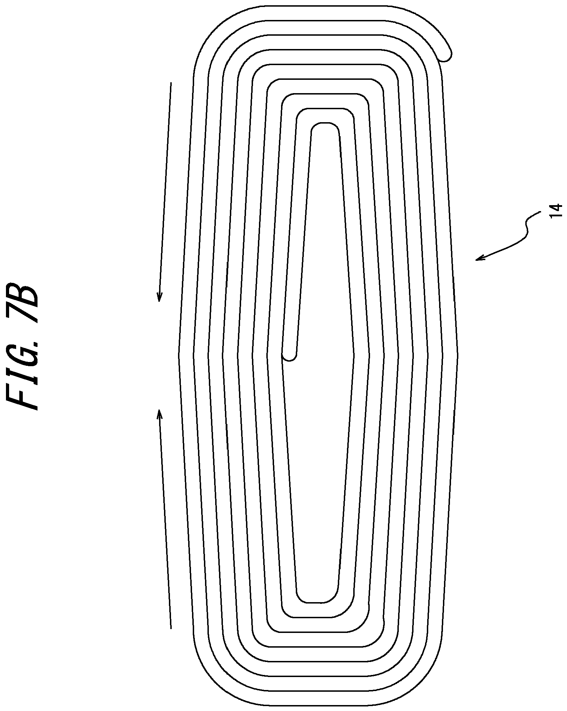

The following refers to the drawings in order to describe the mechanism by which current collector damage is caused by expansion of a wound electrode body and the mechanism by which current collector damage is inhibited through provision of a spacer as described above. FIG. 7A is a schematic side view of a wound electrode body in an initial state. A wound electrode body 14 that is illustrated in FIG. 7A is a flat-type wound electrode body. Upon repeated charge/discharge cycles, the wound electrode body 14 repeatedly expands and contracts in accompaniment to the charging and discharging, thereby causing swelling and increased thickness of an electrode. This results in plastic deformation and increased thickness of the wound electrode body 14 as illustrated in FIG. 7B. As a result, stress concentrates in directions indicated by arrows in FIG. 7B at opposite end portions of the wound electrode body 14. Current collector damage occurs in a section where the stress concentrates.

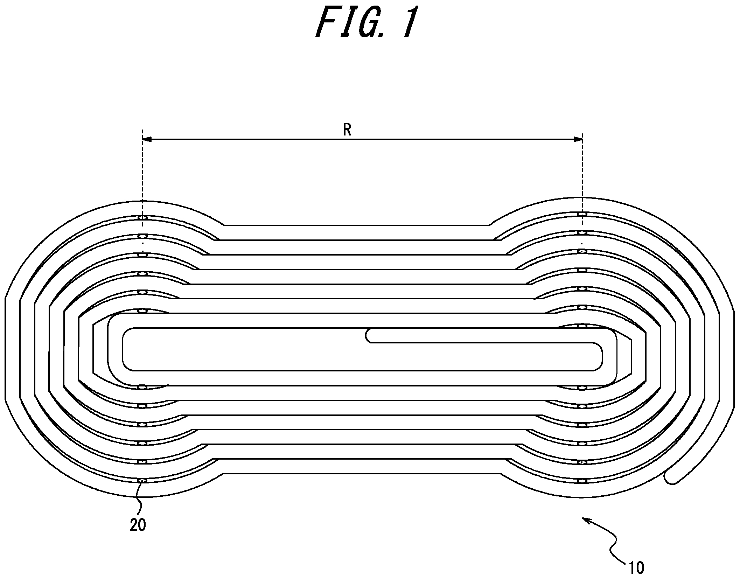

FIG. 1 is a side view schematically illustrating a wound electrode body according to one embodiment. A wound electrode body 10 that is illustrated in FIG. 1 is of a flat type (also referred to as a "prismatic type") and has curved sections respectively located at opposite sides in a flattening direction (up/down direction in FIG. 1) and a flat section located between these curved sections. The wound electrode body 10 is obtained through winding of a laminate including a positive electrode, a negative electrode, and a separator with a winding axis at the center as previously described, and thus has repeating units of the laminate stacked therein. The wound electrode body 10 differs from the wound electrode body 14 that is illustrated in FIGS. 7A and 7B in terms that, at an interface of the same stacking position, spacers 20 are arranged at opposite end portions of the flat section. This makes it possible to inhibit current collector damage in the wound electrode body 10 even upon expansion of the wound electrode body 10. Although the reason for this is not necessarily certain, it is presumed to be as follows. Specifically, arrangement of a spacer 20 provides separation in the stacking direction between battery members (between a separator and a positive or negative electrode) that are stacked with the interface in-between at a section where the spacer 20 is arranged and provides slack in the laminate of the wound electrode body 10 from an initial state. It is presumed that upon expansion of the wound electrode body, stress is relieved through this slack, and current collector damage is inhibited.

The spacer is preferably arranged in a range in which the distance in the flattening direction from opposite ends of the wound electrode body in the flattening direction is 0.1 times to 0.4 times a flattening direction dimension of the wound electrode body, and is more preferably arranged in a range in which the distance in the flattening direction from the opposite ends of the wound electrode body in the flattening direction is 0.2 times to 0.3 times the flattening direction dimension of the wound electrode body. Moreover, the phrase "interface of the same stacking position" means an interface of the same n-number when all interfaces present at a certain section of the wound electrode body when that section is viewed in the stacking direction are denoted as $1^{st}$ interface, $2^{nd}$ interface, ..., $n^{th}$ interface in a direction outward from the winding axis side.

In the case of a flat-type wound electrode body having a flat section such as the wound electrode body 10, it is preferable that, at an interface of the same stacking position, when straight line distance in the flattening direction between spacers arranged at the opposite end portions of the flat section is taken to be R and when length in the flattening direction between the spacers along the laminate at an interface where the spacers are arranged is taken to be L, a relationship $R < L$ is satisfied. When the distance L along the laminate is larger than the straight line distance R between the spacers in this manner, this means that there is slack in the flat section of the laminate. Consequently, stress acting on the wound electrode body can be relieved, and current collector damage can be inhibited.

Moreover, in a flat-type wound electrode body having a flat section, it is preferable that the density of opposite end portions of the flat section is smaller than the density of a central portion of the flat section (i.e., a region other than the opposite end portions of the flat section). When the density of the opposite end portions of the flat section is smaller than the density of the central portion of the flat section, this means that a gap is formed in proximity to a spacer in the laminate as a result of arrangement of the spacer and that the laminate is slackened in proximity to the spacer. Consequently, stress acting on the wound electrode body can be relieved, and current collector damage can be inhibited.

Next, the location at which the spacer is arranged in the laminate is described more specifically with reference to the drawings. No specific limitations are placed on the location where the spacer is arranged. The spacer may be arranged on any one of the negative electrode, the positive electrode, and the separator in the laminate.

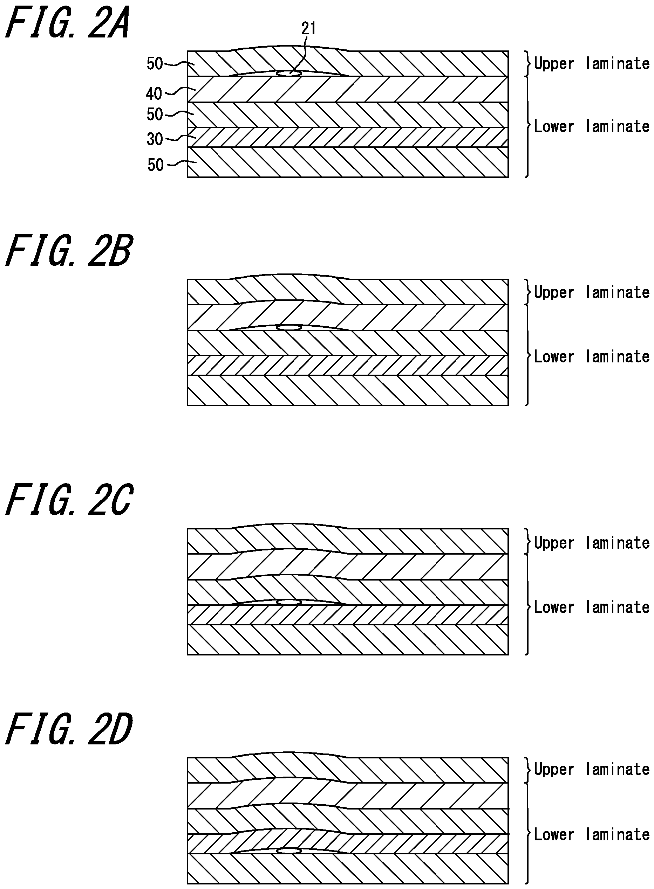

FIGS. 2A to 2D are side views schematically illustrating part of the wound electrode body according to the one embodiment in an enlarged form. Each of these drawings illustrates a lower laminate (composed of a first separator 50, a positive electrode 30, a second separator 50, and a negative electrode 40 in order from the bottom) and part of an upper laminate (first separator 50) that is positioned on the lower laminate. In FIG. 2A, a spacer 21 is arranged on the negative electrode 40 of the lower laminate (i.e., at an $(n+3)^{th}$ interface between the negative electrode 40 of the lower laminate and the upper first separator 50). On the other hand, in FIG. 2B, a spacer 21 is arranged on the second separator 50 in the lower laminate (i.e., at an $(n+2)^{th}$ interface between the second separator 50 and the negative electrode 40 in the lower laminate). Moreover, in FIG. 2C, a spacer 21 is arranged on the positive electrode 30 in the lower laminate (i.e., at an $(n+1)^{th}$ interface between the positive electrode 30 and the second separator 50 in the lower laminate). Furthermore, in FIG. 2D, a spacer 21 is arranged on the first separator 50 in the lower laminate (i.e., at an $n^{th}$ interface between the first separator 50 and the positive electrode 30 in the lower laminate).

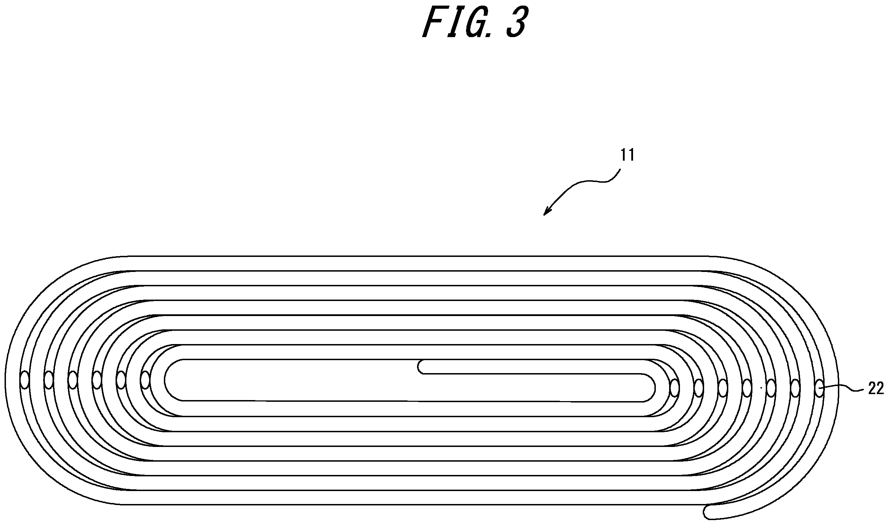

Next, other embodiments of the presently disclosed wound electrode body are described. Although spacers are arranged at the opposite end portions of the flat section of the wound electrode body in FIG. 1, spacers may be arranged at the curved sections of the wound electrode body. FIG. 3 is a side view schematically illustrating a wound electrode body according to such an embodiment. A flat-type wound electrode body 11 that is illustrated in FIG. 3 has spacers 22 arranged at curved sections of the wound electrode body 11. By arranging spacers at the curved sections in this manner, it is possible to cause slackening of the laminate at the curved sections. Consequently, stress acting on the wound electrode body can be relieved, and current collector damage can be inhibited even upon expansion of the wound electrode body in the flattening direction (horizontal direction).

Note that from a viewpoint of further relieving stress and further inhibiting current collector damage, it is preferable that the flat-type wound electrode body has spacers arranged at both the curved sections and the opposite end portions of the flat section.

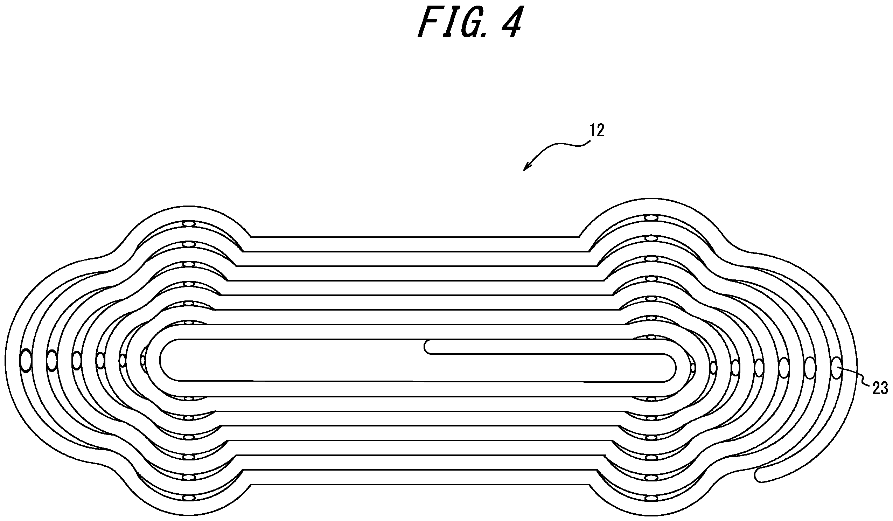

In the wound electrode bodies illustrated in FIG. 1 and FIG. 3, spacers of the same size are arranged at positions overlapping with one another when the wound electrode body is viewed in a stacking direction of the laminate. However, in a case in which a plurality of spacers are arranged, the size of spacers arranged at different stacking positions may differ (i.e., the deposited amount of the spacers may differ). FIG. 4 is a side view schematically illustrating a wound electrode body according to such an embodiment. In a wound electrode body 12 that is illustrated in FIG. 4, a plurality of spacers 23 are arranged at positions overlapping with one another when the wound electrode body 12 is viewed in the stacking direction of the laminate, and the spacers 23 gradually increase in size from an inner side toward an outer side of the wound electrode body 12 (i.e., the deposited amount of the spacers 23 increases gradually from the inner side toward the outer side).

As previously described, the stress acting during expansion increases further outward in the wound electrode body. Therefore, by increasing the deposited amount of the spacer (increasing the size of the spacer) toward the outer side of the wound electrode body in this manner, it is possible to cause greater slackening of the laminate in sections that are further outward, thereby enabling good inhibition of current collector damage at the outer side of the wound electrode body.

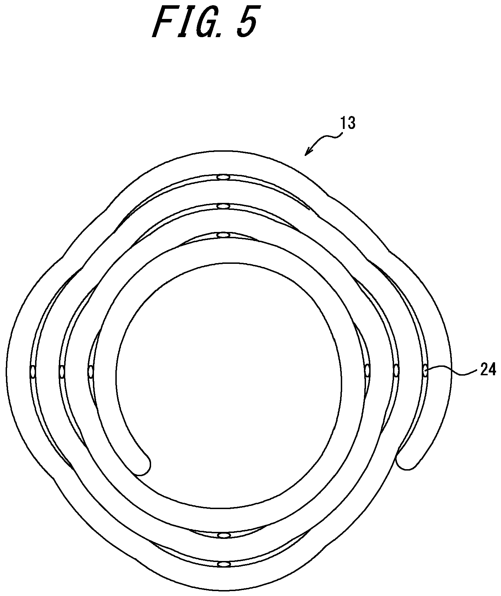

It should be noted that although the wound electrode bodies illustrated in FIG. 1, FIG. 3, and FIG. 4 are each of a flat type, it is possible to relieve stress and inhibit current collector damage even in the case of a wound electrode body having a shape other than a flat type, such as a cylindrical shape. FIG. 5 is a schematic side view of a wound electrode body having a cylindrical shape. In a cylindrical wound electrode body 13 that is illustrated in FIG. 5, a plurality of spacers 24 are arranged along an up/down direction and a left/right direction in the drawing.

Note that even in the case of a wound electrode body having a shape other than a flat type, it is preferable that the deposited amount of the spacer increases gradually from an inner side toward an outer side of the wound electrode body in the same manner as in FIG. 4 from a viewpoint of further inhibiting current collector damage.

<Positive electrode>

Any known positive electrode that is used in production of a secondary battery can be used as the positive electrode without any specific limitations. Specifically, a positive electrode that is obtained by forming positive electrode mixed material layers on both sides of a current collector by a known production method can be used as the positive electrode.

<Negative electrode>

Any known negative electrode that is used in production of a secondary battery can be used as the negative electrode without any specific limitations. Specifically, a negative electrode that is obtained by forming negative electrode mixed material layers on both sides of a current collector by a known production method can be used as the negative electrode.

<Separator>

The separator may be any of those that are described in JP2012-204303A, for example, without any specific limitations.

<Spacer>

The spacer is not specifically limited so long as it can inhibit current collector damage accompanying expansion (deformation) of the wound electrode body. Although the spacer may be arranged on any one of the positive electrode, the negative electrode, and the separator as previously described, it is preferable that the spacer is arranged on the negative electrode. This is because it is possible to adopt a higher drying temperature in drying of a subsequently described coating liquid for spacer formation and to improve production efficiency of the wound electrode body.

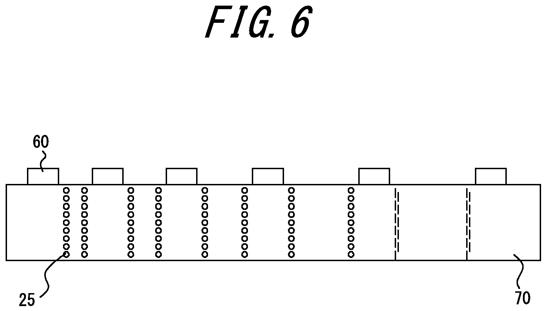

The spacer is typically arranged along a width direction of the laminate (direction parallel to a winding axis of the laminate) (refer to FIG. 6). Moreover, the spacer is preferably arranged at a location where stress acting on a current collector concentrates from a viewpoint of further preventing damage of the current collector. For example, in the case of a flat-type wound electrode body, stress tends to concentrate at opposite end portions of a flat section. Accordingly, it is preferable that the spacer is at least arranged at the opposite end portions of the flat section.

<<Shape>>

Although no specific limitations are placed on the shape of the spacer, it is preferable that the spacer has a dot shape or a dashed line shape, and more preferable that the spacer has a dashed line shape. When the spacer has a dot shape, efficient arrangement of the spacer can be performed by an inkjet method. Moreover, when the spacer has a dashed line shape, injectability of electrolyte solution can be improved because it is easier for electrolyte solution to pass through a section where the spacer is arranged.

<<Thickness>>

The thickness (height) of the spacer is not specifically limited so long as stress acting on a current collector can be relieved, but is preferably 2 $\mu$m or more, and more preferably 5 $\mu$m or more, and is preferably 30 $\mu$m or less, and more preferably 20 $\mu$m or less. Note that the thickness of the spacer is normally larger than the thickness of a subsequently described adhesive layer.

<<Chemical composition>>

The spacer is preferably formed of a particulate polymer, but is not specifically limited thereto. A particulate polymer that has a core-shell structure or a particulate polymer that does not have a core-shell structure may be used as the particulate polymer.

[Particulate polymer having core-shell structure]

The particulate polymer having a core-shell structure has a core-shell structure that includes a core portion and a shell portion covering an outer surface of the core portion.

The shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion.

-Core portion-

--Glass-transition temperature--

The glass-transition temperature of a polymer of the core portion in the particulate polymer is preferably -45°C or higher, and more preferably -40°C or higher. When the glass-transition temperature of the polymer of the core portion is not lower than any of the lower limits set forth above, adhesive function can be expressed under tension during winding, and, in use as a spacer, adjustment of the glass-transition temperature enables adjustment of the elastic modulus such that the particulate polymer is not squashed by winding tension during winding of the laminate.

Note that the glass-transition temperature of the polymer of the core portion can be adjusted by altering the types or proportions of monomers used to produce the polymer of the core portion, for example.

--Chemical composition--

Although no specific limitations are placed on monomers used to produce the polymer of the core portion, a (meth)acrylic acid ester monomer, an aromatic vinyl monomer, a (meth)acrylonitrile monomer, an acid group-containing monomer, a polyfunctional ethylenically unsaturated monomer, a cross-linkable monomer, and so forth are preferable. Note that in the present disclosure, "(meth)acryl" indicates "acryl" and/or "methacryl" and "(meth)acrylo" indicates "acrylo" and/or "methacrylo". One of such monomers may be used individually, or two or more of such monomers may be used in combination in a freely selected ratio.

Monomers described in JP2017-069108A, JP2020-123590A, WO2014/192652A1, and WO2020/067208A1, for example, can be used as these monomers.

[Shell portion]

-Glass-transition temperature-

The glass-transition temperature of a polymer of the shell portion in the particulate polymer is preferably 25°C or higher, and more preferably 40°C or higher. When the glass-transition temperature of the polymer of the shell portion is not lower than any of the lower limits set forth above, good arrangement of the spacer can be performed by an inkjet method.

The glass-transition temperature of the polymer of the shell portion can be adjusted by altering the types or proportions of monomers used to produce the polymer of the shell portion, for example.

-Chemical composition-

Examples of monomers that can be used to produce the polymer of the shell portion include the same monomers as given as examples of monomers that can be used to produce the polymer of the core portion. One of such monomers may be used individually, or two or more of such monomers may be used in combination in a freely selected ratio.

-Production method-

The particulate polymer having a core-shell structure described above can be produced, for example, by stepwise polymerization in which the ratio of monomers for the polymer of the core portion and monomers for the polymer of the shell portion is changed over time. Specifically, the particulate polymer can be produced by continuous, multi-step emulsion polymerization or multi-step suspension polymerization in which a polymer of a preceding step is then covered by a polymer of a succeeding step. For example, the particulate polymer having a core-shell structure can be produced by multi-step emulsion polymerization described in WO2020/067208A1.

[Particulate polymer not having core-shell structure]

-Chemical composition-

Examples of monomers that can be used to produce the particulate polymer not having a core-shell structure include the same monomers as given as examples of monomers that can be used to produce the polymer of the core portion in the particulate polymer having a core-shell structure described above. For example, a (meth)acrylic acid ester monomer, an aromatic vinyl monomer, a polyfunctional ethylenically unsaturated monomer, an acid group-containing monomer, a cross-linkable monomer, and so forth are preferable as monomers used to produce the particulate polymer not having a core-shell structure. Note that one of such monomers may be used individually, or two or more of such monomers may be used in combination in a freely selected ratio.

The particulate polymer not having a core-shell structure can also be caused to function as a binder for adhering a particulate polymer together and adhering the spacer to a substrate through adjustment of the glass-transition temperature.

-Glass-transition temperature-

The glass-transition temperature of the particulate polymer not having a core-shell structure that serves as a binder is preferably -45°C or higher, and more preferably -30°C or higher, and is preferably 25°C or lower, and more preferably 0°C or lower. When the glass-transition temperature of the particulate polymer not having a core-shell structure that functions as a binder is within any of the specific ranges set forth above, it is possible to efficiently adhere together a particulate polymer that is used as a main component of the spacer (i.e., a particulate polymer other than the particulate polymer serving as a binder).

The glass-transition temperature can be adjusted by altering the types or proportions of monomers used in production.

-Volume-average particle diameter-

The volume-average particle diameter of the particulate polymer not having a core-shell structure that serves as a binder is preferably 50 nm or more, more preferably 100 nm or more, and even more preferably 200 nm or more, and is preferably 600 nm or less, more preferably 500 nm or less, and even more preferably 400 nm or less. When the volume-average particle diameter of the particulate polymer not having a core-shell structure is within any of the specific ranges set forth above, it is possible to efficiently adhere together a particulate polymer that is used as a main component of the spacer.

Note that the "volume-average particle diameter" referred to in the present disclosure represents the particle diameter at which, in a particle diameter distribution by volume measured by laser diffraction, cumulative volume calculated from a small diameter end of the distribution reaches 50%, and can be measured using a laser diffraction particle size analyzer (produced by Beckman Coulter, Inc.; product name: LS-13 320), for example.

-Production method-

The particulate polymer not having a core-shell structure can be produced, for example, through polymerization of a monomer composition containing the above-described monomers, carried out in an aqueous solvent such as water, for example, but is not specifically limited to being produced in this manner. The proportion constituted by each monomer in the monomer composition is normally the same as the proportion constituted by each monomer unit in the particulate polymer not having a core-shell structure. Moreover, any commonly known polymerization method and polymerization reaction can be adopted as the polymerization method and the polymerization reaction without any specific limitations.

<<Degree of swelling in electrolyte solution>>

The degree of swelling of the particulate polymer in electrolyte solution (solution of $LiPF_6$ dissolved with a concentration of 1 mol/L in a mixed solvent of ethylene carbonate/diethyl carbonate = 3/7 (volume ratio)) (hereinafter, also referred to simply as the "degree of swelling") is preferably ×1 or more, and more preferably ×3 or more, and is preferably ×20 or less, and more preferably ×15 or less. When the degree of swelling of the particulate polymer is within any of the ranges set forth above, particles of the spacer do not excessively deform and spread out in electrolyte solution, and the expression of adhesive function at a spacer site can also be expected.

Note that the degree of swelling in electrolyte solution of the particulate polymer referred to in the present disclosure can be measured by a method described in the EXAMPLES section.

<<Deformation strength>>

The deformation strength of the particulate polymer is preferably 1 MPa or more, more preferably 3 MPa or more, and even more preferably 5 MPa or more, and is preferably 2 GPa or less, more preferably 1,000 MPa or less, and even more preferably 100 MPa or less. When the deformation strength of the particulate polymer is within any of the ranges set forth above, squashing of the spacer due to winding tension during winding of the laminate can be inhibited well, and, as a result, current collector damage can be further inhibited.

The deformation strength of the particulate polymer can be adjusted by altering the glass-transition temperature of the particulate polymer, for example.

<<Volume-average particle diameter>>

The volume-average particle diameter of the particulate polymer that is used as a main component of the spacer is preferably 100 nm or more, and more preferably 200 nm or more, and is preferably 1,500 nm or less. When the volume-average particle diameter of the particulate polymer is 100 nm or more, a bulky spacer can be efficiently formed. Moreover, when the volume-average particle diameter is 1,500 nm or less, nozzle clogging can be further inhibited in a situation in which the subsequently described coating liquid for spacer formation is applied by an inkjet method, and good arrangement of the spacer is possible.

<Modified example>

Although each wound electrode body according to the embodiments described above has spacers arranged at positions that overlap with one another when viewed from a stacking direction of the laminate, spacers may be arranged at positions that do not overlap when viewed from the stacking direction. Moreover, although each wound electrode body according to the embodiments described above has spacers arranged at all layers in the stacking direction, there may be a layer where a spacer is not arranged. Moreover, the number of spacers that are arranged can be adjusted as appropriate.

<Production of wound electrode body>

The presently disclosed wound electrode body can be produced by a production method according to an example described below, for example. The production method according to one example includes a step of arranging a spacer at a specific position on a surface of either or both of an electrode (positive electrode and/or negative electrode) and a separator (spacer arrangement step), a step of affixing the electrode and the separator to form a laminate (affixing step), and a step of winding the laminate to obtain a wound electrode body (winding step). This production method may optionally further include other steps such as a step of bonding a current collector tab to a specific position on the electrode.

<<Spacer arrangement step>>

In the spacer arrangement step, a spacer is arranged at a specific position on a surface of either or both of an electrode and a separator. Arrangement of the spacer may be performed by, for example, applying a coating liquid for spacer formation containing a particulate polymer, a solvent, and optional additives, and then drying the coating liquid for spacer formation. Although no specific limitations are placed on the application method, it is preferable that the application is performed by an inkjet method from a viewpoint that the spacer can be arranged with a desired shape and from a viewpoint of production efficiency. A conventional and commonly known machine can be used as an inkjet-type coating machine.
The application conditions by an inkjet method are not specifically limited so long as the coating liquid for spacer formation can be applied, and the conditions can be adjusted as appropriate depending on the desired form (plan view shape, thickness, deposited amount, etc.) of the spacer that is to be obtained.
Arrangement of the spacer may be performed with respect to a laminate that has been obtained through the affixing step or may be performed with respect to an electrode and/or separator prior to affixing.
The following describes an example of the arrangement position of the spacer with reference to the drawings. FIG. 6 is a plan view schematically illustrating a laminate used in production of a wound electrode body according to one embodiment. A laminate 70 that is illustrated in FIG. 6 is a laminate that is used in production of a flat-type wound electrode body having spacers arranged at opposite end portions of a flat section. As illustrated in FIG. 6, a plurality of spacers 25 having a dot shape or a dashed line shape are arranged along a width direction of the laminate 70 between current collector tabs 60. The left side of the laminate 70 in the drawing is a section that becomes an inner side of the wound electrode body, whereas the right side of the laminate 70 in the drawing is a section that becomes an outer side of the wound electrode body. Accordingly, the interval between current collector tabs 60 widens gradually from the left side toward the right side of the drawing, and the arrangement interval between spacers 25 also widens gradually from the left side toward the right side of the drawing such that positions where spacers are provided overlap when the wound electrode body is viewed in the stacking direction.
Note that although the spacers 25 may alternatively be arranged at sections corresponding to the current collector tabs 60 of the laminate 70, the spacers 25 are normally not arranged at sections corresponding to the current collector tabs 60.

[Coating liquid for spacer formation]

The particulate polymer that was previously described in the "Wound electrode body" section can be used as the particulate polymer that is contained in the coating liquid for spacer formation.

-Solvent-

Water, an organic solvent, or a mixture thereof can be used as the solvent that is contained in the coating liquid for spacer formation without any specific limitations. Examples of organic solvents that may be used include, but are not specifically limited to, alicyclic hydrocarbons such as cyclopentane and cyclohexane; aromatic hydrocarbons such as toluene and xylene; ketones such as ethyl methyl ketone and cyclohexanone; esters such as ethyl acetate, butyl acetate, $\gamma$-butyrolactone, and $\varepsilon$-caprolactone; nitriles such as acetonitrile and propionitrile; ethers such as tetrahydrofuran and ethylene glycol diethyl ether; and alcohols such as methanol, ethanol, isopropanol, ethylene glycol, propylene glycol, and ethylene glycol monomethyl ether.

-Additives-

Components such as surface tension modifiers, dispersants, viscosity modifiers, reinforcing materials, and additives for electrolyte solution, for example, can be used as additives that are optionally contained in the coating liquid for spacer formation without any specific limitations.

<<Affixing step>>

In the affixing step, an electrode and a separator are affixed to form a laminate. No specific limitations are placed on the number of electrodes and separators that are affixed so long as a negative electrode and a positive electrode are separated by a separator in the obtained laminate. For example, electrodes and separators may be affixed so as to obtain a laminate having a four-layer structure of separator/positive electrode/separator/negative electrode.

From a viewpoint of inhibiting buckling of the wound electrode body that is obtained, it is preferable that an electrode and a separator are affixed via an adhesive layer (adhesive). The adhesive layer is normally provided at a location where the spacer is not arranged on the electrode or separator. For example, in a case in which a flat-type wound electrode body is to be produced, the adhesive layer may be provided at a location corresponding to a current collector tab (refer to FIG. 6).

The adhesive layer may be provided by applying an adhesive layer coating liquid containing a particulate polymer, a solvent, and optional additives, and then drying the adhesive layer coating liquid. A particulate polymer such as previously described can be used as the particulate polymer. The glass-transition temperature of the particulate polymer that is used in the adhesive layer is preferably 65°C or lower, and more preferably not higher than the temperature of an environment in which a secondary battery is used, and is preferably -45°C or higher. When the glass-transition temperature of the particulate polymer that is used in the adhesive layer is within any of the ranges set forth above, buckling of an obtained wound electrode body can be further inhibited because adhesiveness between laminate layers in the wound electrode body further improves.

The solvent and optional additives that are used in the adhesive layer coating liquid are not specifically limited, and any of those that may be used in the previously described coating liquid for spacer formation can be used.

The thickness of the adhesive layer is normally smaller than the thickness of the spacer. For example, the thickness of the adhesive layer is preferably less than 2 $\mu$m, and more preferably 1.5 $\mu$m or less.

Moreover, the degree of swelling in electrolyte solution of the adhesive layer is preferably ×1 or more, and more preferably ×3 or more, and is preferably ×20 or less, and more preferably ×15 or less. When the degree of swelling of the adhesive layer is within any of the ranges set forth above, wet adhesive strength between the laminate in a wound electrode body can be improved.

<<Winding step>>

In the winding step, the laminate that has undergone spacer arrangement is wound to obtain a wound electrode body. No specific limitations are placed on the winding method. For example, winding can be performed by winding the laminate around a core of a specific shape while applying tension thereto. The wound electrode body that is obtained may be subjected to pressing as necessary to obtain a flat-type wound electrode body.

(Secondary battery)

A feature of the presently disclosed secondary battery is that it includes the presently disclosed wound electrode body set forth above. Consequently, current collector damage in the wound electrode body is inhibited in the presently disclosed secondary battery. The presently disclosed secondary battery normally includes the wound electrode body, an electrolyte solution (electrolyte), and a battery container that houses the wound electrode body and the electrolyte solution.

<Battery container>

Any commonly known container can be used as a battery can without any specific limitations so long as it can house the wound electrode body and the electrolyte solution in an inner part thereof. The shape of the battery can is selected in accordance with the shape of the secondary battery.

<Electrolyte solution>

An electrolyte solution having an electrolyte dissolved in a solvent can be used as the electrolyte solution. The electrolyte may be a lithium salt. Examples of lithium salts that may be used include those described in JP2012-204303A. An organic solvent in which the electrolyte can dissolve can be used as the solvent. For example, any of the solvents described in JP2020-123590A can be used.

<Production of secondary battery>

The secondary battery can be assembled by loading the wound electrode body set forth above into the battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; a lead plate; or the like may be provided as necessary. The shape of the secondary battery may be a cylinder type, prismatic type, flat type, or the like.

EXAMPLES

The following provides a more specific description of the present disclosure based on examples. However, the present disclosure is not limited to these examples. Various measurements and evaluations in the examples and comparative examples were performed according to methods described below. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

<Glass-transition temperature>

The glass-transition temperature of a particulate polymer was measured in accordance with JIS K7121:2012 using a differential scanning calorimeter (DSC6220SII produced by SII NanoTechnology Inc.) with a measurement temperature of -100°C to 180°C and a heating rate of 5°C/min.

<Degree of swelling in electrolyte solution>

A coating liquid A or B was dried to obtain a dried product, and then approximately 0.2 g of the dried product was pressed for 2 minutes under pressing conditions of a temperature of 200°C and a pressure of 5 MPa to obtain a film. The obtained film was cut to 1 cm-square to obtain a test specimen, and the mass W2 (g) of this test specimen was measured. Next, the test specimen was immersed in electrolyte solution (solution of $LiPF_6$ dissolved with a concentration of 1 mol/L in a mixed solvent of ethylene carbonate/diethyl carbonate = 3/7 (volume ratio)) at a temperature of 60°C for 72 hours. Thereafter, the test specimen was removed from the electrolyte solution, mixed solvent on the surface of the test specimen was wiped off, and the mass W3 (g) of the test specimen was measured. The degree of swelling (%) was then calculated according to the following formula.

$$\text{Degree of swelling in electrolyte solution } (\%) = \text{W3/W2} \times 100$$

<Deformation strength>

A coating liquid A or B was thinly applied onto SUS by a doctor blade, a location where the particulate polymer was applied as a single particle was then observed using a laser microscope, and the 10% deformation strength of the particulate polymer (deformation strength corresponding to compression displacement of 10% of particle diameter) was subsequently measured based on JIS Z 8844.

<Wet adhesive strength of flat section>

A positive electrode and a separator produced in each example or comparative example were each cut to 50 mm in length and 10 mm in width. The cut positive electrode and separator were then overlapped and stacked. The resultant laminate was pressed at a pressing rate of 30 m/min by roll pressing with a temperature of 25°C and a load of 10 kN/m to obtain a test specimen. This test specimen was immersed in an electrolyte solution having a temperature of 60°C for 72 hours. Note that a solution containing $LiPF_6$ as a supporting electrolyte with a concentration of 1 M in a mixed solvent of ethylene carbonate (EC) and diethyl carbonate (DEC) (volume mixing ratio: EC/DEC = 1/2) was used as the electrolyte solution. After this immersion, the test specimen was removed from the electrolyte solution, and electrolyte solution on the surface of the test specimen was wiped off. This test specimen was pressed once again under conditions of 3 minutes at 1 MPa and 80°C. The re-pressed test specimen was placed with the surface at the current collector-side of the positive electrode facing downward, and cellophane tape (tape prescribed by JIS Z1522) was affixed to the surface of the positive electrode. Note that the cellophane tape was secured to a horizontal test stage in advance. The stress when the separator was peeled off by pulling one end of the separator vertically upward at a pulling speed of 50 mm/min was measured. This measurement was made a total of 3 times.

Separately thereto, a laminate of a negative electrode and a separator was obtained and the laminate was pressed to obtain a test specimen in the same manner as described above. Moreover, a re-pressed test specimen was obtained and measurement of stress after immersion in electrolyte solution was performed a total of 3 times in the same manner as when the positive electrode was used.

An average value of the total of 6 stress measurements made using the positive electrode and the negative electrode was determined as a second peel strength (N/m), and wet adhesiveness of an electrode and a separator was evaluated by the following standard. A larger second peel strength indicates better wet adhesiveness.

  A: Second peel strength of 5.0 N/m or more
  B: Second peel strength of not less than 3.0 N/m and less than 5.0 N/m
  C: Second peel strength of not less than 1.0 N/m and less than 3.0 N/m
  D: Second peel strength of less than 1.0 N/m

<Electrolyte solution injectability>

A lithium ion secondary battery produced in each example or comparative example was injected with electrolyte solution. The inside of the lithium ion secondary battery was then depressurized to -100 kPa and was held in this state for 1 minute. Thereafter, the battery was closed and sealed. After 24 hours, the battery was disassembled, and the state of impregnation of electrolyte solution in an electrode was visually checked. An evaluation was made by the following standard. Impregnation of a larger portion of the electrode with electrolyte solution indicates higher electrolyte solution injectability.

  A: Electrolyte solution impregnation area of 90% or more
  B: Electrolyte solution impregnation area of not less than 50% and less than 90%
  C: Electrolyte solution impregnation area of less than 50%

<45°C cycle characteristics>

A lithium ion secondary battery produced in each example or comparative example was left at rest at a temperature of 25°C for 5 hours. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Thereafter, the lithium ion secondary battery was subjected to 500 cycles of a charge/discharge operation with a cell voltage of 4.20 V to 3.00 V and a charge/discharge rate of 1.0C in an environment having a temperature of 45°C. The discharge capacity of the 1st cycle was defined as X1, and the discharge capacity of the 500th cycle was defined as X2.

The discharge capacity X1 and the discharge capacity X2 were used to determine a capacity maintenance rate $\Delta C'$ ($\Delta C' = (X2/X1) \times 100(\%)$) that was then evaluated by the following standard. A larger value for the capacity maintenance rate $\Delta C'$ indicates that the secondary battery has better cycle characteristics.

  A: Capacity maintenance rate $\Delta C'$ of 90% or more
  B: Capacity maintenance rate $\Delta C'$ of not less than 85% and less than 90%
  C: Capacity maintenance rate $\Delta C'$ of not less than 80% and less than 85%
  D: Capacity maintenance rate $\Delta C'$ of less than 80%

<Drop test after endurance test>

A secondary battery was subjected to cycling evaluation under the same conditions as for 45°C cycle characteristics described above. At timings corresponding to 100 cycles, 300 cycles, and 500 cycles, the secondary battery was disconnected and was dropped onto concrete ground from a height of 1 m. The battery capacity was measured before and after dropping. An evaluation was made by the following standard by judging that current collector damage had occurred inside the battery in a situation in which the battery capacities before and after dropping differed by 3% or more.

A: No current collector damage even at 500 cycles
B: Current collector damage at 500 cycles
C: Current collector damage at 300 cycles
D: Current collector damage at 100 cycles

<Initial thickness>

The thickness of a wound electrode body in an initial state prior to undergoing the above-described 45°C cycle characteristics test was measured using a caliper.

A: Not less than 5.00 mm and not more than 5.20 mm
B: More than 5.20 mm and not more than 5.50 mm

<Thickness increase>

A ratio of the thickness of a wound electrode body after undergoing 500 cycles in the 45°C cycle characteristics test relative to the thickness of the wound electrode body in an initial state (thickness of wound electrode body after 500 cycles/thickness of wound electrode body in initial state × 100) was determined and was evaluated by the following standard.

A: Thickness increase of 10% or less
B: Thickness increase of more than 10% and less than 20%
C: Thickness increase of 20% or more

(Production Example 1)

<Production of particulate polymer 1>

In a reactor A including a stirrer, 0.20 parts of sodium dodecyl sulfate, 0.30 parts of ammonium persulfate, and 180 parts of deionized water were loaded and mixed to obtain a mixture, and the mixture was heated to 65°C. Meanwhile, a monomer composition for seed particles was produced in a separate vessel by mixing 88.0 parts of n-butyl acrylate as a (meth)acrylic acid ester monomer, 6.0 parts of acrylic acid as an acidic group-containing monomer, 6.0 parts of acrylonitrile as a (meth)acrylonitrile monomer, 0.8 parts of sodium dodecyl sulfate, and 40 parts of deionized water.

This monomer composition for seed particles was continuously added into the above-described reactor A over 4 hours to perform a polymerization reaction. The temperature inside the reactor was maintained at 65°C during continuous addition of the monomer composition for seed particles. Moreover, once the continuous addition was complete, the polymerization reaction was continued for a further 3 hours at 80°C. This yielded a water dispersion of seed particles. The volume-average particle diameter D50 of the seed particles was measured and was determined to be 120 nm.

Next, a reactor including a stirrer was charged with 16.7 parts in terms of solid content of the water dispersion of seed particles described above (comprising 14.7 parts of n-butyl acrylate units, 1 part of acrylic acid units, and 1 part of acrylonitrile units), 80.8 parts of ethylene glycol dimethacrylate (produced by Kyoeisha Chemical Co., Ltd.; product name: LIGHT ESTER EG) as a polyfunctional ethylenically unsaturated monomer, 2.5 parts of acrylic acid as an acidic group-containing monomer, 0.8 parts of sodium dodecylbenzenesulfonate, 3.2 parts of t-butyl peroxy-2-ethylhexanoate (produced by NOF Corporation; product name: PERBUTYL O) as a polymerization initiator, and 160 parts of deionized water. These materials were stirred at 35°C for 12 hours to cause complete absorption of the polyfunctional ethylenically unsaturated monomer, the acidic group-containing monomer, and the polymerization initiator by the seed particles. Thereafter, the temperature inside the reactor was maintained at 90°C, and a polymerization reaction (seeded polymerization) was performed for 5 hours.

Next, steam was introduced in order to remove unreacted monomer and initiator decomposition product, and thereby obtain a water dispersion of a particulate polymer 1.

A glass-transition temperature of the obtained particulate polymer 1 was not detected in measurement up to 180°C.

(Production Example 2)

<Production of particulate polymer 2>

A reactor including a stirrer was supplied with 100 parts of deionized water and 0.3 parts of ammonium persulfate.

The gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 28.3 parts of styrene as an aromatic vinyl monomer, 66.6 parts of 2-ethylhexyl acrylate as a (meth)acrylic acid ester monomer, 3 parts of methacrylic acid as an acidic group-containing monomer, and 0.1 parts of ethylene glycol dimethacrylate as a cross-linkable monomer. This monomer composition for core portion formation was continuously added into the reactor over 3 hours to perform a polymerization reaction at a temperature of 80°C. Polymerization was continued until a polymerization conversion rate of 95% was reached to yield a water dispersion containing a particulate polymer forming a core portion. Next, a monomer composition for shell portion formation containing 1.3 parts of styrene as an aromatic vinyl monomer, 0.65 parts of butyl acrylate, and 0.05 parts of methacrylic acid as an acidic group-containing monomer was continuously supplied into the water dispersion over 60 minutes so as to continue polymerization. At the point at which the polymerization conversion rate reached 98%, cooling was performed to quench the reaction to yield a water dispersion containing a particulate polymer 2.

The obtained particulate polymer 2 had a core portion glass-transition temperature of -18°C and a shell portion glass-transition temperature of 53°C.

(Production Example 3)

<Production of particulate polymer 3>

A reactor including a stirrer was supplied with 90 parts of deionized water and 0.5 parts of ammonium persulfate. The gas phase was purged with nitrogen gas, and the temperature was raised to 80°C. Meanwhile, a monomer composition was obtained in a separate vessel by mixing 15 parts of deionized water, 1.0 parts of NEOPELEX G15 (produced by Kao Corporation) as an emulsifier, 70.0 parts of 2-ethylhexyl acrylate as a (meth)acrylic acid ester monomer, 25.0 parts of styrene as an aromatic vinyl monomer, 1.7 parts of allyl glycidyl ether and 0.3 parts of allyl methacrylate as cross-linkable monomers, and 3.0 parts of acrylic acid as an acidic group-containing monomer.

This monomer composition was continuously added into the reactor over 4 hours to perform polymerization. The reaction was performed at 80°C during the continuous addition. Once the continuous addition was complete, a further 3 hours of stirring was performed at a temperature of 80°C, and then the reaction was ended.

The resultant water dispersion was cooled to a temperature of 25°C and was subsequently adjusted to pH 8.0 through addition of sodium hydroxide aqueous solution. Thereafter, steam was introduced so as to remove unreacted monomer and thereby obtain a water dispersion of a particulate polymer 3 that did not have a core-shell structure.

The obtained particulate polymer 3 had a glass-transition temperature of -25°C.

(Production Example 4)

<Production of coating liquid A>

The dispersion liquid of the particulate polymer 1 and the dispersion liquid of the particulate polymer 3 were mixed in a solid content weight ratio of 100:10 and were then diluted to a solid content concentration of 10.5% through addition of deionized water. Propylene glycol was further added to the resultant dispersion liquid so as to adjust the solid content concentration to 10% and obtain a coating liquid A. The particulate polymer deformation strength measured using the coating liquid A was 15 MPa, and the degree of swelling in electrolyte solution of a dried product of the coating liquid A was ×1.1.

(Production Example 5)

<Production of coating liquid B>

The dispersion liquid of the particulate polymer 2 and the dispersion liquid of the particulate polymer 3 were mixed in a solid content weight ratio of 100:10 and were then diluted to a solid content concentration of 10.5% through addition of deionized water. Propylene glycol was further added to the resultant dispersion liquid so as to adjust the solid content concentration to 10% and obtain a coating liquid B. The particulate polymer deformation strength measured using the coating liquid B was 2 MPa, and the degree of swelling in electrolyte solution of a dried product of the coating liquid B was ×2.5.

(Example 1)

<Formation of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the target binder for a negative electrode mixed material layer.

Next, 100 parts of artificial graphite (volume-average particle diameter: 15.6 $\mu$m) as a negative electrode active material, 1 part in terms of solid content of a 2% aqueous solution of carboxymethyl cellulose sodium salt (produced by Nippon Paper Industries Co., Ltd.; product name: MAC350HC) as a viscosity modifier, and deionized water were mixed, were adjusted to a solid content concentration of 68%, and were then further mixed at 25°C for 60 minutes. The solid content concentration was further adjusted to 62% with deionized water, and a further 15 minutes of mixing was performed at 25°C. Deionized water and 1.5 parts in terms of solid content of the water dispersion containing the binder for a negative electrode mixed material layer described above were added to the resultant mixture, the final solid content concentration was adjusted to 52%, and a further 10 minutes of mixing was performed. The resultant mixture was subjected to defoaming under reduced pressure to yield a slurry composition for a secondary battery negative electrode having good fluidity.

The obtained slurry composition for a secondary battery negative electrode was applied onto copper foil of 20 $\mu$m in thickness serving as a current collector by a comma coater such as to have a thickness after drying of approximately 150 $\mu$m. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode web having a negative electrode mixed material layer thickness of 80 $\mu$m.

Thereafter, current collector exposing sections at opposite ends of the negative electrode web were subjected to trimming by a laser and were slitted in half.

<Formation of positive electrode>

A slurry composition for a secondary battery positive electrode was obtained by mixing 100 parts of LiCoO$_2$ having a volume-average particle diameter of 12 $\mu$m as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting the total solid content concentration to 70%, and mixing these materials in a planetary mixer.

The obtained slurry composition for a secondary battery positive electrode was applied onto aluminum foil of 20 $\mu$m in thickness serving as a current collector by a comma coater such as to have a thickness after drying of approximately 150 $\mu$m. The applied slurry composition was dried by conveying the aluminum foil inside a 60°C oven for 2 minutes at a speed of 0.5 m/min. Thereafter, 2 minutes of heat treatment was performed at 120°C to obtain a positive electrode web.

The obtained positive electrode web was rolled using a roll press to obtain a positive electrode web including a positive electrode mixed material layer.

Thereafter, current collector exposing sections at opposite ends of the positive electrode web were subjected to trimming by a laser and were slitted in half.

<Preparation of separator>

A separator web made of polyethylene (PE) was prepared.

<Production of wound electrode body>

The produced coating liquid A, coating liquid B, negative electrode, positive electrode, and separator were used to produce a wound electrode body as follows.

First, the coating liquid A (for spacer formation) and the coating liquid B (for adhesive layer formation) were applied onto the negative electrode in specific patterns by an inkjet method. In addition, the coating liquid B (for adhesive layer formation) was also applied onto the positive electrode in the same manner. The negative electrode and positive electrode that had undergone application were used to produce a laminate with an order of negative electrode/separator/positive electrode/separator. This laminate was then wound to obtain a wound body. Note that the spacer height (thickness) was set as 5 $\mu$m and the adhesive layer height (thickness) was set as 0.5 $\mu$m. Moreover, spacers were provided in a manner such that the deposited amount thereof increased gradually from an inner side toward an outer side of the wound electrode body.

The obtained wound body was subjected to 5 seconds of pressing by a flat-plate press under conditions of 25°C and 2 MPa so as to process the wound body into a flat state. In this wound body in a flat state, current collection sites (trimmed locations) of the positive electrode and the negative electrode were bundled together and were respectively electrically connected to a positive electrode tab and a negative electrode tab by ultrasonic bonding to obtain current collection tabs.

Through the series of processes described above, a wound electrode was produced.

<Production of secondary battery>

The flat-type wound electrode body obtained as described above was housed in a battery container, and opposite ends of the wound electrode body in the flattening direction were fixed to the battery can. Moreover, electrolyte solution (solvent: ethylene carbonate/diethyl carbonate/vinylene carbonate = 68.5/30/1.5 (volume ratio); electrolyte: LiPF$_6$ of 1 M in concentration) was injected. Thereafter, an opening of the battery can was blocked and sealed. Various evaluations of the secondary battery were performed as previously described. The results are shown in Table 1.

(Example 2)

A wound electrode body and a secondary battery were produced in the same way as in Example 1 with the exception that spacers were only arranged at opposite end portions of a flat section of the wound electrode body. Various measurements and evaluations were also performed. The results are shown in Table 1.

(Example 3)

A wound electrode body and a secondary battery were produced in the same way as in Example 2 with the exception that the spacer shape was changed to a dot shape. Various measurements and evaluations were also performed. The results are shown in Table 1.

(Example 4)

A wound electrode body and a secondary battery were produced in the same way as in Example 3 with the exception that an adhesive layer was not provided in a flat section. Various measurements and evaluations were also performed. The results are shown in Table 1.

(Example 5)

A wound electrode body and a secondary battery were produced in the same way as in Example 4 with the exception that the deposited amount of the spacers was not gradually increased from an inner side toward an outer side of the wound electrode body. Various measurements and evaluations were also performed. The results are shown in Table 1.

(Example 6)

A wound electrode body and a secondary battery were produced in the same way as in Example 5 with the exception that the spacers were provided on the separator. Various measurements and evaluations were also performed. The results are shown in Table 1.

(Example 7)

A wound electrode body and a secondary battery were produced in the same way as in Example 5 with the exception that the spacers were formed using the coating liquid B. Various measurements and evaluations were also performed. The results are shown in Table 1.

(Comparative Example 1)

A wound electrode body and a secondary battery were produced in the same way as in Example 4 with the exception that spacers were not provided. Various measurements and evaluations were also performed. The results are shown in Table 1.

(Comparative Example 2)

A wound electrode body and a secondary battery were produced in the same way as in Example 1 with the exception that spacers were not provided and that an adhesive layer (height: 0.3 $\mu$m) was provided through application of the coating liquid B by gravure coating. Various measurements and evaluations were also performed. The results are shown in Table 1.

[Table 1]

| | | Example 1 | Example 2 | Example 3 | Example 4 | Example 5 | Example 6 | Example 7 | Comparative Example 1 | Comparative Example 2 |
|---|---|---|---|---|---|---|---|---|---|---|
| Application method of coating liquid | | Inkjet | Inkjet | Inkjet | Inkjet | Inkjet | Inkjet | Inkjet | - | Gravure |
| Spacer | Shape | Dashed line | Dashed line | Dot | Dot | Dot | Dot | Dot | - | - |
| | Member where spacer is arranged | Negative electrode | Negative electrode | Negative electrode | Negative electrode | Negative electrode | Separator | Negative electrode | - | - |
| | Arrangement position (position in flat-type wound electrode body) | Opposite ends of flat section and curved sections | Opposite ends of flat section | Opposite ends of flat section | Opposite ends of flat section | Opposite ends of flat section | Opposite ends of flat section | Opposite ends of flat section | - | - |
| | Type of coating liquid | Coating liquid A | Coating liquid A | Coating liquid A | Coating liquid A | Coating liquid A | Coating liquid A | Coating liquid B | - | - |
| | Deformation strength of particulate polymer measured using coating liquid A or B (MPa) | 15 | 15 | 15 | 15 | 15 | 15 | 2 | - | - |
| | Deposited amount in wound electrode body | Outer side > Inner side | Outer side > Inner side | Outer side > Inner side | Outer side > Inner side | Outer side = Inner side | Outer side = Inner side | Outer side = Inner side | - | - |
| Flat section adhesive layer | Type of coating liquid | Coating liquid B | Coating liquid B | Coating liquid B | - | - | - | - | - | Coating liquid B |
| | Degree of swelling in electrolyte solution of dried product of coating liquid B (×) | 2.5 | 2.5 | 2.5 | - | - | - | - | - | 2.5 |

EP 4 503 240 A1

19

(continued)

| Evaluation | | Example 1 | Example 2 | Example 3 | Example 4 | Example 5 | Example 6 | Example 7 | Comparative Example 1 | Comparative Example 2 |
|---|---|---|---|---|---|---|---|---|---|---|
| Evaluation | Wet adhesive strength of flat section | A | A | A | C | C | C | C | C | A |
| | Electrolyte solution injectability | A | A | B | B | B | B | B | C | C |
| | 45°C cycle characteristics | A | A | A | B | B | B | B | C | A |
| | Drop test after endurance test | A | B | B | B | B | B | C | D | D |
| | Initial battery thickness | A | A | A | A | B | B | A | A | A |
| | Increase of battery thickness | A | A | A | A | A | A | B | C | C |

It can be seen from Table 1 that current collector damage after charge/discharge cycles can be inhibited well in Examples 1 to 7 in which spacers are arranged in a laminate.

INDUSTRIAL APPLICABILITY

According to the present disclosure, it is possible to provide a wound electrode body that can inhibit current collector damage accompanying charge/discharge cycles and a non-aqueous secondary battery that includes this wound electrode body.

REFERENCE SIGNS LIST

| | |
|---|---|
| 10-14 | wound electrode body |
| 20-25 | spacer |
| 30 | positive electrode |
| 40 | negative electrode |
| 50 | separator |
| 60 | current collector tab |
| 70 | laminate |

**Claims**

1.  A wound electrode body obtained through winding of a laminate comprising a positive electrode, a negative electrode, and a separator,
    wherein a spacer is arranged at one or more locations at either or both of an interface between the positive electrode and the separator and an interface between the negative electrode and the separator.

2.  The wound electrode body according to claim 1, wherein

    the wound electrode body is of a flat type and has curved sections respectively located at opposite sides in a flattening direction and a flat section located between the curved sections, and
    the spacer is arranged either or both of at the curved sections and at opposite end portions of the flat section.

3.  The wound electrode body according to claim 2, wherein

    the spacer is arranged at the opposite end portions of the flat section, and
    when straight line distance in the flattening direction between the spacer arranged at the opposite end portions of the flat section is taken to be R and when length in the flattening direction between the spacer along the laminate at an interface where the spacer is arranged is taken to be L, a relationship $R < L$ is satisfied.

4.  The wound electrode body according to claim 2, wherein density of the opposite end portions of the flat section is smaller than density of a central portion of the flat section in the laminate.

5.  The wound electrode body according to claim 2, wherein the spacer is arranged both at the curved sections and at the opposite end portions of the flat section.

6.  The wound electrode body according to claim 1, wherein

    the spacer is arranged in plurality at positions overlapping with one another when the wound electrode body is viewed in a stacking direction of the laminate, and
    deposited amount of the spacer increases gradually from an inner side toward an outer side of the wound electrode body.

7.  The wound electrode body according to claim 1, wherein the spacer has a dot shape.

8.  The wound electrode body according to claim 1, wherein the spacer has a dashed line shape.

9. The wound electrode body according to claim 1, wherein the laminate further comprises an adhesive layer.

10. The wound electrode body according to claim 9, wherein the adhesive layer has a degree of swelling in electrolyte solution of not less than ×1 and not more than ×20.

11. The wound electrode body according to claim 1, wherein

    the spacer is formed of a particulate polymer, and
    the particulate polymer has a deformation strength of not less than 1 MPa and not more than 2 GPa.

12. A secondary battery comprising the wound electrode body according to any one of claims 1 to 11.

EP 4 503 240 A1

# FIG. 1

## FIG. 2A

50 · · ·
40 · · ·
50 · · ·
30 · · ·
50 · · ·

21

Upper laminate

Lower laminate

## FIG. 2B

Upper laminate

Lower laminate

## FIG. 2C

Upper laminate

Lower laminate

## FIG. 2D

Upper laminate

Lower laminate

# FIG. 3

EP 4 503 240 A1

FIG. 4

EP 4 503 240 A1

# FIG. 5

# FIG. 6

FIG. 7A

14

FIG. 7B

EP 4 503 240 A1

## INTERNATIONAL SEARCH REPORT

| International application No. |
|---|
| **PCT/JP2023/008156** |

**A. CLASSIFICATION OF SUBJECT MATTER**

*H01M 10/0587*(2010.01)i; *H01M 10/04*(2006.01)i; *H01M 10/052*(2010.01)i; *H01M 50/46*(2021.01)i;
*H01M 50/474*(2021.01)i
FI: H01M10/0587; H01M10/052; H01M50/474; H01M10/04 W; H01M50/46

According to International Patent Classification (IPC) or to both national classification and IPC

**B. FIELDS SEARCHED**

Minimum documentation searched (classification system followed by classification symbols)

H01M10/0587; H01M10/04; H01M10/052; H01M50/46; H01M50/474

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-244234 A (ARCOTRONICS INDUSTRIES SPA) 08 September 2005 (2005-09-08) claims 1-46, drawings | 1, 2, 12 |
| A | | 3-11 |
| X | JP 2016-131148 A (SEMICONDUCTOR ENERGY LAB. CO., LTD.) 21 July 2016 (2016-07-21) paragraphs [0081]-[0088], fig. 11 | 1, 2, 12 |
| A | | 3-11 |
| X | WO 2021/192645 A1 (PANASONIC INTELLECTUAL PROPERTY MANAGEMENT CO., LTD.) 30 September 2021 (2021-09-30) claim 1, examples | 1, 2, 12 |
| A | | 3-11 |
| X | JP 2011-8929 A (PANASONIC CORP.) 13 January 2011 (2011-01-13) claims 1-16, fig. 1 | 1, 2, 12 |
| A | | 3-11 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2023/008156** |

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2018/123088 A1 (MAXELL HOLDINGS, LTD.) 05 July 2018 (2018-07-05) claim 1, fig. 2-4 | 1, 12 |
| A | | 2-11 |

Form PCT/ISA/210 (second sheet) (January 2015)

INTERNATIONAL SEARCH REPORT
Information on patent family members

| International application No. |
| --- |
| **PCT/JP2023/008156** |

| Patent document cited in search report | | | Publication date (day/month/year) | Patent family member(s) | | | Publication date (day/month/year) |
| --- | --- | --- | --- | --- | --- | --- | --- |
| JP | 2005-244234 | A | 08 September 2005 | US<br>claims 1-46, drawings<br>EP | 2005/0188533<br><br>1569252 | A1<br><br>A1 | |
| JP | 2016-131148 | A | 21 July 2016 | (Family: none) | | | |
| WO | 2021/192645 | A1 | 30 September 2021 | CN<br>claim 1, examples | 115336076 | A | |
| JP | 2011-8929 | A | 13 January 2011 | (Family: none) | | | |
| WO | 2018/123088 | A1 | 05 July 2018 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006164959 A
- JP 2012204303 A
- JP 2017069108 A

- JP 2020123590 A
- WO 2014192652 A1
- WO 2020067208 A1